# EUROPÄISCHE PATENTSCHRIFT

(11) **EP 2 688 267 B1**
(45) Veröffentlichungstag und Bekanntmachung des Hinweises auf die Patenterteilung: **07.11.2018**
(21) Anmeldenummer: 13175288.3
(22) Anmeldetag: 05.07.2013
(51) Int. Cl.: H04L 29/08

(54) **Verfahren und Vorrichtung zur Fernkommunikation eines Kraftfahrzeuges mit einer externen Kommunikationseinheit**
Method and apparatus for remote communication of an external communication unit with a motor vehicle
Procédé et dispositif de communication à distance d'un véhicule automobile avec une unité de communication externe

(30) Priorität: 17.07.2012 DE 102012014002
(43) Veröffentlichungstag der Anmeldung: 22.01.2014
(73) Patentinhaber: Volkswagen Aktiengesellschaft, 38440 Wolfsburg (DE)
(72) Erfinder: Kalus, Andreas, 97422 Schweinfurt (DE); Beilke, Ulrik, 38102 Braunschweig (DE); Stuckenbrock, Denis, 04435 Schkeuditz (DE)

(56) Entgegenhaltungen:
- US-A1- 2002 109 583
- US-A1- 2008 027 591
- US-A1- 2012 130 604

## Beschreibung

Die Erfindung betrifft ein Verfahren und eine Vorrichtung zur Femkommunikation eines Kraftfahrzeuges mit einer externen Kommunikationseinheit.

Aus der DE 10 2008 022 771 A1 ist ein Verfahren und ein System zum Übertragen von Fahrzeug-Diagnosedaten zu einem Fahrzeug-Dienstleister bekannt. Dabei werden Sensoren zum Erzeugen von Sensorsignalen genutzt, die den Status bzw. die Beschaffenheit von Fahrzeugkomponenten anzeigen. Ein Diagnosemodul in dem Fahrzeug erzeugt Diagnosedaten auf Basis der Sensorsignale und überträgt die Diagnosedaten zu einem Kommunikationsmodul eines Telefon-Freisprechsystems in dem Fahrzeug. Das Kommunikationsmodul überträgt die Diagnosedaten unter Verwendung von Bluetooth-Kommunikation drahtlos zu einem Bluetoothfähigen Mobiltelefon. Das Mobiltelefon überträgt die Diagnosedaten über das Internet zu einem Intemet-Server, um festzustellen, ob eine der Fahrzeugkomponenten repariert oder gewartet werden muss. Der Dienstleister informiert einen Benutzer des Fahrzeugs über eine Fahrzeugkomponente, die repariert oder gewartet werden muss.

Aus der DE 10 2009 019 753 A1 ist ein Verfahren zur Datenkommunikation zwischen einem Diensteanbieter und einem Fahrzeug mit elektrischem Antrieb bekannt, wobei eine Kommunikationsverbindung zwischen dem Fahrzeug und dem Diensteanbieter über eine erste drahtlose Verbindung herstellbar ist, wobei, wenn das Fahrzeug an einer Ladestation über eine Ladeverbindung zum Laden eines im Fahrzeug vorgesehenen Akkumulators angeschlossen ist oder wird, eine weitere Kommunikationsverbindung zwischen dem Fahrzeug und dem Diensteanbieter über die Ladestation hergestellt wird.

Insbesondere wird über die Datenkommunikation mindestens einer der Dienste Diagnose, Wartung, Fahrzeugkonfiguration, Auswahl eines Ladeprofils, Uhrzeit der nächsten Nutzung, Freischaltung von Funktionen, Vorkonditionierung des Fahrzeugs, entferntes Software-Update von Fahrzeugfunktionen oder Infotainment-Systemen, Synchronisation oder Aktualisierung von Nutzdaten oder Daten eines Navigationssystems und/oder eines Adressbuchs und/oder eines Kalenders, Übertragung von Audio- und/oder Videodaten, Internet, Telefonie, entfernte Emissionsmessung bereitgestellt. Als Ladeprofile können beispielsweise Schnell-Ladung, kostengünstiges Laden oder batterieschonendes Laden vorgesehen sein. Unter Vorkonditionierung des Fahrzeugs können beispielsweise Komfortfunktionen wie Standklimatisierung oder -heizung verstanden werden.

Aus der DE 10 2007 050 308 A1 ist ein Multimedia-System für den Einbau in ein Kraftfahrzeug bekannt, wobei das Multimedia-System umfasst:
- eine Basiskomponente mit einer Verstärkereinheit zum Verstärken von elektromagnetischen Signalen, wobei die Basiskomponente eine frei zugängliche Frontseite aufweist; und
- eine portable Multimediakomponente, welche in die Frontseite der Basiskomponente in lösbarer Weise integrierbar ist, wobei die Multimediakomponente mit einer Eingabevorrichtung, einer Ausgabevorrichtung und einer Anzeigevorrichtung ausgebildet ist, und wobei die Basiskomponente und die Multimediakomponente sowohl im von der Basiskomponente gelösten Zustand als auch im in die Basiskomponente integrierten Zustand für eine Kommunikation untereinander ausgebildet sind, wobei die portable Multimediakomponente wenigstens eine Sende-/Empfangseinheit zum Senden bzw. Empfangen von elektromagnetischen Signalen aufweist.

Weiter ist vorgesehen, dass die Basiskomponente ebenfalls eine Sende-/Empfangseinheit aufweist. Mit dieser Sende-/Empfangseinheit ist es möglich, mit der portablen Multimediakomponente im gelösten Zustand zu kommunizieren, wobei der Nutzer die Möglichkeit hat, Informationen über den Fahrzeugzustand wie z.B. die Innenraumtemperatur abzufragen, die dann auf der Anzeigevorrichtung der Multimediakomponente dargestellt werden können. Dazu sind mit der Basiskomponente entsprechende Sensoren verbunden. Auf der Grundlage dieser Informationen kann der Nutzer dann mit Hilfe der portablen Multimediakomponente z.B. eine im Fahrzeug befindliche Standheizung oder Standklimatisierung oder auch ein Cabrioverdeck steuern. Ferner ist es denkbar, dass zum Zwecke der Diebstahlsicherung eine im Fahrzeug installierte Kamera an der Basiskomponente angeschlossen ist, wobei der Nutzer von der Sende-/Empfangseinheit der Basiskomponente ausgestrahlte Bilder mit der portablen Multimediakomponente empfangen kann.

Aus der DE 10 2010 006 149 A1 ist ein Fernwirkungssystem für ein Fahrzeug bekannt, das eine erste Funktionseinheit des Fahrzeugs und ein mobiles Datenendgerät mit einem ersten Anwendungsmodul umfasst, das dazu eingerichtet ist, von einem Benutzer auf das mobile Datenendgerät geladen und dort installiert zu werden, dem Benutzer eine an die erste Funktionseinheit angepasste, vorzugsweise graphische, Bedienoberfläche zur Verfügung zu stellen und über mindestens einen Mobilkommunikationskanal Daten mit der ersten Funktionseinheit auszutauschen.

Dabei ist weiter vorgesehen, dass das erste Anwendungsmodul dazu eingerichtet ist, mindestens eine Betriebseinstellung der ersten Funktionseinheit einzustellen. Handelt es sich bei der Funktionseinheit beispielsweise um eine Klimaanlage oder Standheizung des Fahrzeugs, kann der Benutzer über ein Anwendungsmodul eines mobilen Datenendgerätes den Klimatisierungsvorgang starten, möglicherweise lange bevor er sich selbst zu dem Fahrzeug begibt.

Ferner sind aus US2002109583, US2012130604, US2008027591 weitere Systeme bekannt, die eine Übertragung von Zustandsparametern eines Fahrzeuges an sowie eine Fernsteuerung von Fahrzeugelementen durch eine ferne Mobilkommunikationseinheit erlauben.

Der Erfindung liegt das technische Problem zugrunde, ein Verfahren und eine Vorrichtung zur Fernkommunikation eines Kraftfahrzeugs mit einer externen Kommunikationseinheit zu schaffen, mittels derer ein Nutzer eine verbesserte Übersicht erhält.

Die Lösung des technischen Problems ergibt sich durch die Gegenstände mit den Merkmalen der Ansprüche 1 und 4. Weitere vorteilhafte Ausgestaltungen der Erfindung ergeben sich aus den Unteransprüchen.

Das Verfahren bzw. die Vorrichtung zur Fernkommunikation eines Kraftfahrzeuges mit einer externen Kommunikationseinheit umfasst mindestens eine Luftschnittstelle und mindestens eine Sensorik, wobei über die Luftschnittstelle Daten der Sensorik des Kraftfahrzeugs an die Kommunikationseinheit übertragbar sind, wobei die mindestens eine Sensorik derart ausgebildet ist, dass mittels der Sensorik ein äußeres Umfeld des Kraftfahrzeugs erfasst wird. Hierdurch kann der Nutzer sich über die Umgebung des Kraftfahrzeugs informieren und gegebenenfalls Daten des Kraftfahrzeugs besser interpretieren. Die externe Kommunikationseinheit kann dabei ein mobiles Endgerät wie beispielsweise ein Smartphone oder ein PDA (Personal Digital Assistant) sein oder aber ein PC oder ein ähnliches Dateneingabegerät. Die Verbindung zwischen der externen Kommunikationseinheit und dem Kraftfahrzeug kann dabei direkt oder über einen zwischengeschalteten Service-Server erfolgen, der beispielsweise von einem Diensteanbieter zur Verfügung gestellt wird. Die mindestens eine Sensorik zur Erfassung der äußeren Umgebung ist beispielsweise als Kamera und/oder als Ultraschallsensorik und/oder als Radar- und/oder Lidarsensorik ausgebildet. Dabei kann mittels der Sensorik insbesondere erfasst werden, ob sich das Kraftfahrzeug in einem geschlossenen Raum wie beispielsweise einer Garage befindet. Vorzugsweise wird dabei auf ohnehin in dem Kraftfahrzeug vorhandene Sensorik zurückgegriffen So kann beispielsweise auf die Ultraschallsensoren und/oder die Kameras einer Einparkassistenzvorrichtung zurückgegriffen werden und/oder auf die Kameras und/oder Radar- und/oder Lidarsensoren einer automatischen Distanzregelung oder eines Active Cruise Control-Assistenzsystems. Kommen mehrere und insbesondere verschiedene Sensoriken zum Einsatz, so können deren Daten fusioniert werden, um ein verbessertes Abbild des Umfeldes des Kraftfahrzeuges zu ermitteln.

In einer Ausführungsform kann zusätzlich mittels der externen Kommunikationseinheit mindestens eine Fahrzeugkomponente angesteuert werden.

In einer weiteren Ausführungsform ist die Fahrzeugkomponente die mindestens eine Sensorik und/oder eine Fahrzeugklimaanlage, die über die externe Kommunikationseinheit angesteuert wird. Eine Fahrzeugklimaanlage dient einer Klimatisierung des Fahrzeugs und umfasst eine Vorrichtung zur Kühlung und/oder zum Erwärmen des Fahrzeugs. Die Klimatisierung kann beispielsweise im Stand über eine Standheizung erfolgen, die elektrisch oder mittels eines Verbrenners betrieben werden kann. So kann sich der Nutzer beispielsweise in Echtzeit durch Aktivierung der Sensorik das aktuelle Umfeld des Kraftfahrzeuges übermitteln lassen und/oder die Fahrzeugklimaanlage aktivieren (z.B. die Standheizung einschalten). Die Aktivierung anderer Fahrzeugkomponenten wie beispielsweise ein Cabrioverdeck sind ebenfalls möglich. Durch die Kenntnis des Umfeldes des Kraftfahrzeuges kann dann der Nutzer besser entscheiden, ob dieser eine bestimmte Fahrzeugkomponente ansteuern will oder nicht. Insbesondere bei der Standklimatisierung kann es bei Kraftfahrzeugen mit Brennkraftmaschine (einschließlich Hybrid- und Range-Extender-Fahrzeugen) notwendig sein, die Brennkraftmaschine einzuschalten, was zur Entstehung von Abgasen führt, die insbesondere in geschlossenen Räumen zu Problemen führen kann. Weiß nun der Nutzer nicht, wo genau das Kraftfahrzeug steht (beispielsweise weil eine andere Person zuvor das Kraftfahrzeug benutzt und geparkt hat), so kann zunächst das Umfeld bzw. die Umgebung des Kraftfahrzeugs erfasst werden und in Abhängigkeit des erfassten Umfeldes entschieden werden, ob es sinnvoll ist, die Standklimatisierung anzusteuern.

In einer weiteren Ausführungsform werden beim Abstellen des Kraftfahrzeugs die Daten der mindestens einen Sensorik abgespeichert. Beispielsweise wird mit dem Signal "Klemme 15 aus" eine Screen-Shot einer Kamera und/oder die letzten Daten der Ultraschallsensoren abgespeichert. Diese Ausführungsform kommt insbesondere zur Anwendung, wenn die Sensorik nicht aktiv durch die externe Kommunikationseinrichtung angesteuert werden kann. In diesem Fall können dann aber die abgespeicherten Daten abgerufen werden, sodass sich der Nutzer trotzdem ein Bild von der Umgebung des Kraftfahrzeugs machen kann, beispielsweise ob das Kraftfahrzeug auf der Straße oder in einer Garage steht. Prinzipiell kann diese Ausführungsform auch ergänzend Anwendung finden, wenn die Sensorik aktiv angesteuert werden kann, um beispielsweise Veränderungen der Umgebung leichter aufzufinden.

In einer weiteren Ausführungsform wird in Abhängigkeit der Daten der mindestens einen Sensorik eine Ansteuerung einer Fahrzeugkomponente durch die Kommunikationseinheit zugelassen oder nicht zugelassen. Dabei findet intern, beispielsweise in einem der Sensorik zugeordneten Steuergerät, eine Bestimmung der Umgebung statt. Ermittelt dann das Steuergerät, dass das Kraftfahrzeug sich in einer geschlossenen Garage befindet, so kann beispielsweise das Starten einer Standheizung nicht zugelassen werden. Vorzugsweise wird die externe Kommunikationseinheit dann unterrichtet, dass der Steuerbefehl nicht durchgeführt wird.

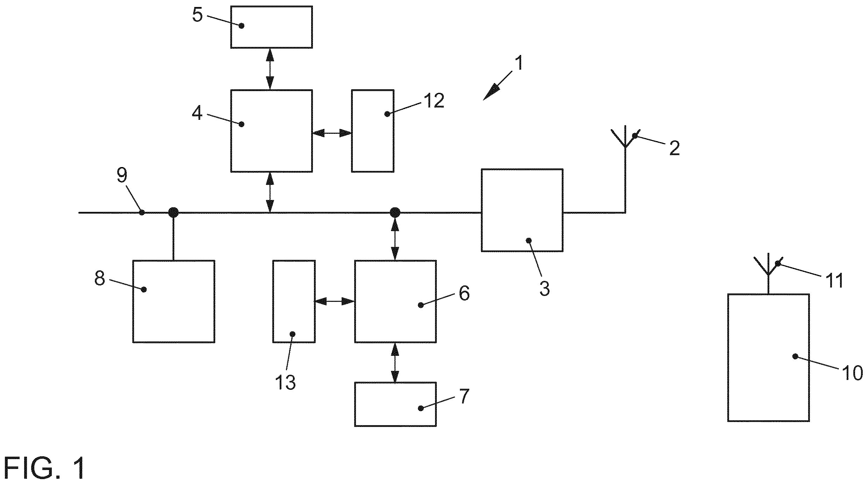

Die Erfindung wird nachfolgend anhand eines bevorzugten Ausführungsbeispiels näher erläutert. Die einzige Figur zeigt ein schematisches Blockschaltbild einer Vorrichtung zur Fernkommunikation eines Kraftfahrzeugs mit einer externen Kommunikationseinheit.

Die Vorrichtung 1 zur Fernkommunikation eines Kraftfahrzeugs mit einer externen Kommunikationseinheit 10 umfasst eine Luftschnittstelle 2, ein erstes Steuergerät 3, ein zweites Steuergerät 4 mit einer ersten Sensorik 5 zur Erfassung des äußeren Umfeldes des Kraftfahrzeuges, ein drittes Steuergerät 6 mit einer zweiten Sensorik 7 zur Erfassung des äußeren Umfeldes des Kraftfahrzeuges und eine Fahrzeugklimaanlage 8. Die externe Kommunikationseinheit 10 ist dabei mit einer Luftschnittstelle 11 ausgebildet, wobei die externe Kommunikationseinheit 10 und die Vorrichtung 1 über die Luftschnittstellen 11, 2 miteinander drahtlos kommunizieren können.

Die erste Sensorik 5 ist beispielsweise als mindestens eine Kamera ausgebildet, die beispielsweise als Ein- und/oder Ausparkhilfe oder Bestandteil eines Fahrspur-Assistenzsystems ist. Die zweite Sensorik 7 umfasst beispielsweise Ultraschall-Sensoren, die Bestandteil einer Ein- und Ausparkhilfe sind. Die Steuergeräte 3, 4, 6 und die Fahrzeugklimaanlage 8 sind dabei über mindestens ein Bussystem 9 miteinander verbunden. Dabei kann auch vorgesehen sein, dass die Steuergeräte 3, 4, 6 und die Fahrzeugklimaanlage 8 in verschiedenen Bussystemen angeordnet sind, die aber über Gateway-Steuergeräte mindestens teilweise miteinander kommunizieren können.

Möchte ein Nutzer nun beispielsweise über die externe Kommunikationseinheit 10 die Fahrzeugklimaanlage 8 starten, beispielsweise eine Standheizung einschalten, so baut zunächst die externe Kommunikationseinheit 10 eine Datenverbindung zur Vorrichtung 1 auf und übermittelt einen Steuerbefehl, um Daten zum äußeren Umfeld des Kraftfahrzeugs zu erhalten. Dieser Steuerbefehl gelangt über die Luftschnittstelle 2 an das erste Steuergerät 3. Das erste Steuergerät 3 setzt diesen Steuerbefehl der externen Kommunikationseinheit 10 in einen Steuerbefehl für das Bussystem 9 um und sendet diesen an das zweite und dritte Steuergerät 4, 6. Die Steuergeräte 4, 6 aktivieren daraufhin die erste und zweite Sensorik 5, 7, die Daten vom äußeren Umfeld des Kraftfahrzeugs aufnehmen. Die Daten der Sensoriken 5, 7 werden in den zugeordneten Steuergeräten 4, 6 und/oder im ersten Steuergerät 3 ausgewertet. Das erste Steuergerät 3 setzt dann die Daten des äußeren Umfeldes in ein Datenformat für die Luftschnittstelle 2 um, um diese an die externe Kommunikationseinheit 10 zu übermitteln. Der Nutzer kann sich dann an einer Anzeigeeinheit die Daten anschauen und entscheiden, ob dieser beispielsweise einen Steuerbefehl zur Aktivierung der Fahrzeugklimaanlage 8 an die Vorrichtung 1 übermittelt.

Weiter kann vorgesehen sein, dass die Daten der Sensoriken 5, 7 in der Vorrichtung 1 derart aufbereitet werden, dass die Vorrichtung 1 das äußere Umfeld bewertet und in Abhängigkeit dieser Bewertung bestimmte weitere Steuerbefehle durch die externe Kommunikationseinrichtung 10 nicht durchführt. Beispielsweise wird der Steuerbefehl zur Aktivierung der Fahrzeugklimaanlage 8 nicht durchgeführt, wenn aufgrund der Daten des äußeren Umfeldes erkennbar ist, dass sich das Kraftfahrzeug in einem geschlossenen Raum befindet.

Zusätzlich oder alternativ zur Aktivierung der Sensoriken 5, 7 über die externe Kommunikationseinheit 10 kann vorgesehen sein, dass beim Abschalten der Zündung die letzten aktuellen Daten der Sensoriken 5, 7 in einen Speicher 12, 13 gespeichert werden, die dann von der externen Kommunikationseinheit 10 ausgelesen werden können.

## Patentansprüche

1. Verfahren zur Fernkommunikation eines Kraftfahrzeuges mit einer externen Kommunikationseinheit (10), mittels mindestens einer Luftschnittstelle (2) und mindestens einer Sensorik (5, 7), wobei über die Luftschnittstelle (2) Daten der Sensorik (5,7) des Kraftfahrzeugs an die Kommunikationseinheit (10) übertragen werden, wobei mittels der Kommunikationseinheit (10) mindestens eine Fahrzeugkomponente angesteuert wird, wobei die mindestens eine Fahrzeugkomponente eine Fahrzeugklimaanlage (8) ist,
**dadurch gekennzeichnet, dass**
mittels der Sensorik (5, 7) ein äußeres Umfeld des Kraftfahrzeugs erfasst wird, wobei beim Abstellen des Kraftfahrzeugs die Daten der mindestens einen Sensorik (5, 7) abgespeichert werden, wobei die Kommunikationseinheit (10) die abgespeicherten Daten der mindestens einen Sensorik (5, 7) abrufen kann.

2. Verfahren nach Anspruch 1, **dadurch gekennzeichnet, dass** mittels der Kommunikationseinheit (10) die Sensorik (5, 7) aktiv angesteuert wird.

3. Verfahren nach Anspruch 1 oder 2, **dadurch gekennzeichnet, dass** in Abhängigkeit der Daten der mindestens eine Sensorik (5, 7) eine Ansteuerung einer Fahrzeugkomponente durch die Kommunikationseinheit (10) zugelassen wird oder nicht.

4. Vorrichtung (1) zur Fernkommunikation eines Kraftfahrzeugs mit einer externen Kommunikationseinheit (10), umfassend mindestens eine Luftschnittstelle (2) und mindestens eine Sensorik (5, 7), wobei über die Luftschnittstelle (2) Daten der Sensorik (5,7) des Kraftfahrzeugs an die Kommunikationseinheit (10) übertragen werden, wobei mindestens ein Steuergerät (3, 4, 6) im Kraftfahrzeug derart ausgebildet ist, dass das Steuergerät in Abhängigkeit eines Steuerbefehls der externen Kommunikationseinheit (10) mindestens eine Fahrzeugkomponente ansteuert, wobei die mindestens eine Fahrzeugkomponente eine Fahrzeugklimaanlage (8) ist,
**dadurch gekennzeichnet, dass**
die Sensorik (5, 7) derart ausgebildet ist, dass mittels der Sensorik (5, 7) ein äußeres Umfeld des Kraftfahrzeugs erfasst wird, wobei die Vorrichtung (1) mindestens einen Speicher (12, 13) umfasst, in dem Daten der Sensorik (5, 7) beim Abstellen des Kraftfahrzeugs abgespeichert werden, wobei die abgespeicherten Daten durch die Kommunikationseinheit (10) abrufbar sind.

5. Vorrichtung nach Anspruch 4, **dadurch gekennzeichnet, dass** eine weitere Fahrzeugkomponente die Sensorik (5, 7) ist, die aktiv durch die Kommunikationseinheit (10) ansteuerbar ist.

6. Vorrichtung nach einem der Ansprüche 4 oder 5, **dadurch gekennzeichnet, dass** in Abhängigkeit der Daten der mindestens einen Sensorik (5, 7) eine Ansteuerung einer Fahrzeugkomponente durch die Kommunikationseinheit (10) zugelassen wird oder nicht.

## Claims

1. Method for remote communication between a motor vehicle and an external communication unit (10) by means of at least one air interface (2) and at least one sensor system (5, 7), wherein data from the sensor system (5, 7) of the motor vehicle are transmitted to the communication unit (10) via the air interface (2), wherein at least one vehicle component is controlled by means of the communication unit (10), wherein the at least one vehicle component is a vehicle air-conditioning system (8),
**characterized in that**
an external environment of the motor vehicle is captured by means of the sensor system (5, 7), wherein the data from the at least one sensor system (5, 7) are stored when the motor vehicle is switched off, wherein the communication unit (10) can retrieve the stored data from the at least one sensor system (5, 7).

2. Method according to Claim 1, **characterized in that** the sensor system (5, 7) is actively controlled by means of the communication unit (10).

3. Method according to Claim 1 or 2, **characterized in that**, on the basis of the data from the at least one sensor system (5, 7), control of a vehicle component by the communication unit (10) is permitted or is not permitted.

4. Apparatus (1) for remote communication between a motor vehicle and an external communication unit (10), comprising at least one air interface (2) and at least one sensor system (5, 7), wherein data from the sensor system (5, 7) of the motor vehicle are transmitted to the communication unit (10) via the air interface (2), wherein at least one control device (3, 4, 6) is formed in the motor vehicle in such a manner that the control device controls at least one vehicle component on the basis of a control command from the external communication unit (10), wherein the at least one vehicle component is a vehicle air-conditioning system (8),
**characterized in that**
the sensor system (5, 7) is formed in such a manner that an external environment of the motor vehicle is captured by means of the sensor system (5, 7), wherein the apparatus (1) comprises at least one memory (12, 13) which stores data from the sensor system (5, 7) when the motor vehicle is switched off, wherein the stored data can be retrieved by the communication unit (10).

5. Apparatus according to Claim 4, **characterized in that** a further vehicle component is the sensor system (5, 7) which can be actively controlled by the communication unit (10).

6. Apparatus according to either of Claims 4 and 5, **characterized in that**, on the basis of the data from the at least one sensor system (5, 7), control of a vehicle component by the communication unit (10) is permitted or is not permitted.

## Revendications

1. Procédé de communication à distance d'un véhicule automobile avec une unité de communication externe (10), au moyen d'au moins une interface radio (2) et d'au moins un système de capteurs (5, 7), dans lequel des données du système de capteurs (5, 7) du véhicule automobile sont transmises à l'unité de communication (10) par l'intermédiaire de l'interface radio (2), dans lequel au moins un composant de véhicule est commandé au moyen de l'unité de communication (10), dans lequel ledit au moins un composant de véhicule est un système de climatisation de véhicule (8),
**caractérisé en ce qu'**un environnement extérieur du véhicule automobile est détecté au moyen du système de capteurs (5, 7), dans lequel les données dudit au moins un système de capteurs (5, 7) sont mémorisées lors du stationnement du véhicule automobile, dans lequel l'unité de communication (10) peut récupérer les données mémorisées dudit au moins un système de capteurs (5, 7).

2. Procédé selon la revendication 1, **caractérisé en ce que** le système de capteurs (5, 7) est commandé activement au moyen de l'unité de communication (10).

3. Procédé selon la revendication 1 ou 2, **caractérisé en ce qu'**une commande d'un composant de véhicule par l'unité de communication (10) est autorisée ou non en fonction des données dudit au moins un système de capteurs (5, 7).

4. Dispositif (1) de communication à distance d'un véhicule automobile avec une unité de communication externe (10), comprenant au moins une interface radio (2) et au moins un système de capteurs (5, 7), dans lequel des données du système de capteurs (5, 7) du véhicule automobile sont transmises à l'unité de communication (10) par l'intermédiaire de l'interface radio (2),
dans lequel au moins une unité de commande (3, 4, 6) du véhicule automobile est conçue de manière à ce que l'appareil de commande commande au moins un composant de véhicule en fonction d'un ordre de commande de l'unité de communication externe (10), dans lequel ledit au moins un composant de véhicule est un système de climatisation de véhicule (8),
**caractérisé en ce que** le système de capteurs (5, 7) est conçu de manière à ce qu'un environnement extérieur du véhicule automobile soit détecté au moyen du système de capteurs (5, 7), dans lequel le dispositif (1) comprend au moins une mémoire (12, 13) dans laquelle des données du système de capteurs (5, 7) sont mémorisées lors du stationnement du véhicule automobile, dans lequel les données mémorisées peuvent être récupérées par l'unité de communication (10).

5. Dispositif selon la revendication 4, **caractérisé en ce qu'**un autre composant de véhicule est le système de capteurs (5, 7), qui peut être commandé activement par l'unité de communication (10).

6. Dispositif selon l'une des revendications 4 ou 5, **caractérisé en ce qu'**une commande d'un composant de véhicule par l'unité de communication (10) est autorisée ou non en fonction des données dudit au moins un système de capteurs (5, 7).
